# EUROPEAN PATENT SPECIFICATION

(11) **EP 3 329 352 B1**
(45) Date of publication and mention of the grant of the patent: **11.03.2020**
(21) Application number: 16830716.3
(22) Date of filing: 06.07.2016
(51) Int. Cl.: H04N 5/44, G06F 3/0481, G06F 3/0482, G06F 3/0484, G06F 3/0488, H04N 1/00, H04N 5/232, H04M 1/725, H04N 21/41

(54) **USER TERMINAL APPARATUS AND CONTROLLING METHOD THEREOF**
BENUTZERENDGERÄTEVORRICHTUNG UND ZUGEHÖRIGES STEUERUNGSVERFAHREN
APPAREIL DE TERMINAL D'UTILISATEUR ET PROCÉDÉ DE COMMANDE ASSOCIÉ

(30) Priority: 29.07.2015 KR 20150107371
(43) Date of publication of application: 06.06.2018
(73) Proprietor: Samsung Electronics Co., Ltd., Suwon-si, Gyeonggi-do 16678 (KR)
(72) Inventor: WON, Young-min, Suwon-si Gyeonggi-do 16548 (KR); KIM, Young-jin, Yongin-si Gyeonggi-do 16948 (KR); OH, Joon-seop, Yongin-si Gyeonggi-do 16944 (KR)
(74) Representative: Gulde & Partner
(86) International application number: PCT/KR2016/007298
(87) International publication number: WO 2017/018683

(56) References cited:
- EP-A1- 1 507 436
- US-A1- 2010 325 554
- US-A1- 2013 052 946
- US-A1- 2014 257 532
- US-A1- 2015 130 957
- Anh Nguyen, Amy Banic: "Low-cost Augmented Reality prototype for controlling network devices", Off-the-shelf VR workshop at IEEE Virtual Reality 2013 , 12 June 2014 (2014-06-12), XP055483525, Retrieved from the Internet: URL:https://arxiv.org/pdf/1406.3117.pdf [retrieved on 2018-06-12]

## Description

### [Technical Field]

The present disclosure relates to a user terminal apparatus and a controlling method thereof, and for example, to a user terminal apparatus for managing at least one device in a predetermined service space and a controlling method thereof.

### [Background Art]

With the development of electronic technologies, various types of devices have been developed and distributed, and devices providing various communication functions are widely used in general homes. Further, a device which conventionally did not provide a communication function is now providing a communication function, creating the environment of Internet of Things (IoT).

IoT is an abbreviation of Internet of Things which refers to an environment where objects in our daily lives are connected via wired or wireless network to share information. In addition, users may remotely control various devices using a communication function.

However, in order to control or monitor a specific IoT device, a certain program is needed, and depending on IoT devices or IoT manufacturers, a separate program is required, causing inconvenience in using IoT devices.

US 2010/0325554 A1 discloses a photo-based network control device including a device information database, an image receiving unit, an identification unit, a graphic user interface (GUI) and a network module. The device information database stores operating information of a target device and the image receiving unit obtains a photo image of surroundings including an image of the target device. The identification unit identifies the target device on the photo image to generate an identification result. The GUI displays the photo image and the operating information based on the identification result, and receives a control signal associated with the operating information. Finally, the network module transmits an indication signal to the target device according to a network protocol and the control signal.

A macro command between IoT devices may be generated using the method of selecting devices in an existing website and connecting resources supported by each device, etc., but in this case, users should connect to the corresponding web service and select a desired device from among various devices, causing inconvenience to the users.

Accordingly, a method of managing IoT devices by not only controlling and monitoring IoT devices but also generating a macro command between IoT devices in more intuitive manner is required.

### [Disclosure]

### [Technical Problem]

An aspect of the example embodiments relates to a user terminal apparatus which identifies a device included in a photographed image, based on mapping information where at least one device in a predetermined service space and a corresponding image are mapped, and manages the identified device and a controlling method thereof.

### [Technical Solution]

According to a claimed embodiment, a user terminal apparatus is provided, including a storage for storing mapping information for mapping at least one device in a predetermined service space on a corresponding image; a camera; a display; and a processor configured to: display a first photographed image captured by the camera on the display, the first photographed image including the at least one device, sense a type of a device included in the first photographed image and broadcast a response request signal regarding a device corresponding to the sensed device type in the predetermined space, display a list of devices which transmit a response signal based on the response request signal being received from the at least one device, generate and store mapping information in the storage, wherein an image of a device included in the first photographed image and a device selected from the displayed list are mapped in the storage based on a user command, and identify in a second photographed image captured by the camera a device from the at least one device based on the stored mapping information, and, based on receiving a user command related to the identified device, display information on the second photographed image.

The processor, in response to a user command related to controlling of functions of the identified device being received, may receive information regarding functions of the identified device from outside and display the information on the photographed image, and execute a function selected from the displayed information regarding functions on the identified device.

The processor may display a UI for generating a macro command to execute at least one function of a plurality of devices consecutively on an area of the photographed image, and in response to at least one function selected from the information regarding functions corresponding to each device being received on the UI, may generate a macro command to execute the functions of the plurality of devices input on the UI consecutively.

The processor, in response to execution of a function of a device included in the generated macro command being sensed, may execute a function of another device included in the macro command.

The processor, in response to a user command to display the UI for generating a macro command being received, may provide a recommendation list regarding functions of a plurality of devices to be included in the macro command based on history of operation states of the plurality of devices at a predetermined point in time.

The apparatus may further include a communicator comprising communication circuitry configured to perform communication with a network apparatus which is installed in the predetermined service space to control the at least one device, and the processor may transmit a control command to execute the selected function on the identified device to the network apparatus.

The processor, in response to receiving a user command to monitor an operation state of the identified device, may receive information regarding an operation state of the identified device and display the information on an area where the identified device is displayed on the photographed image.

The processor, in response to receiving a user command to generate a snap shot image regarding the photographed image, may generate a snap shot image including at least one of Internet Protocol (IP) information and Mac address information corresponding to the identified device on the photographed image.

The processor inventively senses a type of a device included in the photographed image and broadcast a response request signal regarding a device corresponding to the sensed device type in the predetermined space, and in response to a response signal being received from the at least one device, displays a list of devices which transmit the response signal and store mapping information where an image of a device included in the photographed image and a device selected from the displayed list are mapped in the storage based on a user command.

The processor, in response to the response signal being received, may display the device list in which identification information of the at least one device is arranged consecutively based on at least one of strength of the received signal and a time when the response signal is received.

According to another claimed embodiment, a method of controlling a user terminal apparatus is provided, including displaying a first photographed image, the first photographed image including at least one device in a predetermined service space; sensing a type of a device included in the first photographed image and broadcasting a response request signal regarding a device corresponding to the sensed device type in the predetermined space, displaying a list of devices which transmit a response signal based on the response request signal being received from the at least one device, generating and storing mapping information, wherein an image of a device included in the first photographed image and a device selected from the displayed list are mapped based on a user command; and identifying in a second photographed image a device from the at least one device based on the stored mapping information, and, based on receiving a user command related to the identified device, displaying information on the second photographed image.

The displaying on the photographed image may further include, in response to receiving a user command related to controlling of functions of the identified device, receiving information regarding functions of the identified device from outside and displaying the information on the photographed image and executing a function selected from the displayed information regarding functions on the identified device.

The method may further include displaying a UI for generating a macro command to execute at least one function of a plurality of devices consecutively on one area of the photographed image, and in response to receiving at least one function selected from the information regarding functions corresponding to each device from the UI, generating a macro command to execute the functions of the plurality of devices received from the UI consecutively.

The method may further include, in response to execution of a function of a device included in the generated macro command being sensed, executing a function of another device included in the macro command.

The method may further include, in response to receiving a user command to display the UI for generating a macro command, providing a recommendation list regarding functions of a plurality of devices to be included in the macro command based on history of operation states of the plurality of devices at a predetermined point in time.

The controlling may include transmitting a control command to execute the selected function on the identified device to the network apparatus which is installed in the predetermined service space to control the at least one device.

The displaying on the photographed image may include, in response to receiving a user command to monitor an operation state of the identified device, receiving information regarding an operation state of the identified device and displaying the information on an area where the identified device is displayed on the photographed image.

The method may further include, in response to receiving a user command to generate a snap shot image regarding the photographed image, generating including at least one of Internet Protocol (IP) information and Mac address information corresponding to the identified device on the photographed image.

The method inventively includes sensing a type of a device included in the photographed image, broadcasting a response request signal regarding a device corresponding to the sensed device type in the predetermined space, in response to a response signal being received from the at least one device, displaying a list of devices which transmit the response signal, and mapping an image of a device included in the photographed image with a device selected from the displayed list and storing the mapping information.

The displaying the device list may include, in response to the response signal being received, displaying the device list in which identification information of the at least one device is arranged consecutively based on at least one of strength of the received signal and a time when the response signal is received.

### [Advantageous Effects]

According to the above-described various claimed embodiments, a user terminal apparatus identifies a device included in a photographed image based on mapping information and manages the identified device and thus, a user may manage various devices more conveniently.

### [Description of Drawings]

The above and/or other aspects of the disclosure will be more apparent from the following detailed description, taken in conjunction with the accompanying drawings, in which like reference numerals refer to like elements, and wherein:
FIG. 1 is a diagram illustrating an example device management system according to an example embodiment;
FIGS. 2A and 2B are block diagrams illustrating example configurations of a user terminal apparatus according to an example embodiment;
FIG. 3 is a diagram illustrating an example software structure stored in a storage according to an example embodiment;
FIG. 4 is a diagram illustrating an example UI for receiving a user command related to a device according to an example embodiment;
FIG. 5 is a diagram illustrating example controlling of functions of a device according to an example embodiment;
FIGS. 6A-6D are diagrams illustrating examples of generating of a macro command using a plurality of functions according to an example embodiment;
FIG. 7 is a diagram illustrating an example method of monitoring an operation state of a device according to an example embodiment;
FIGS. 8A and 8B are diagrams illustrating an example method of generating and using a snap shot image according to an example embodiment;
FIGS. 9A and 9B are diagrams illustrating an example method of generating mapping information according to an example embodiment; and
FIG. 10 is a flowchart illustrating an example method of controlling a user terminal apparatus according to an example embodiment.

### [Best Mode]

### [Mode for Invention]

The example embodiments of the disclosure may be diversely modified. Accordingly, specific example embodiments are illustrated in the drawings and are described in greater detail in the detailed description. However, it is to be understood that the disclosure is not limited to a specific example embodiment, but includes all modifications, equivalents, and substitutions. Also, well-known functions or constructions may not be described in detail when they may obscure the disclosure with unnecessary detail.

Hereinafter, various example embodiments will be described in greater detail with reference to the accompanying drawings.

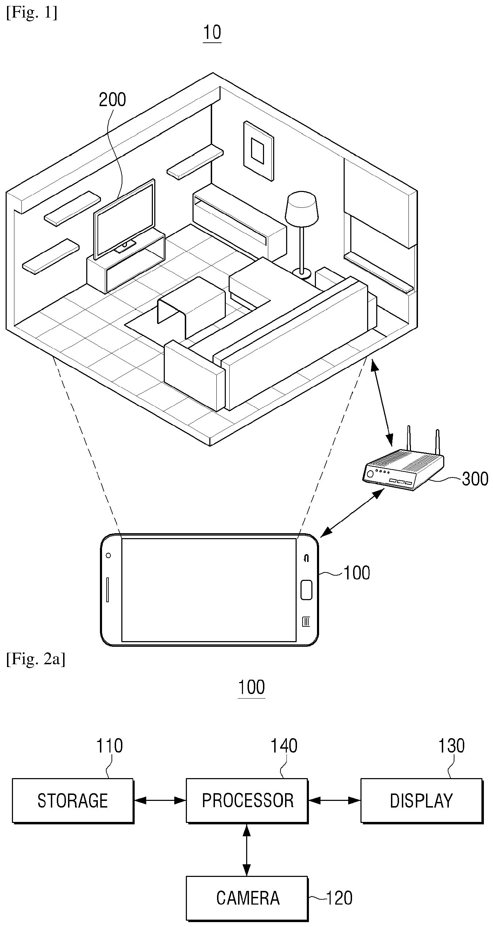

FIG. 1 is a diagram illustrating an example device management system 10 according to an example embodiment. As illustrated in FIG. 1, the device management system 10 may include a user terminal apparatus 100, at least one device 200 and a network apparatus 300.

The device management system 10 may be implemented as, for example, a home network system capable of connecting electric/electronic products used in a house using a single system to enable bilateral communication, but may be implemented as any system which connects and controls a plurality of devices via network. For example, the device management system 10 may include a system which connects and controls devices in a company via network.

The network apparatus 300 may, for example, be implemented as a gateway apparatus, a network server, an external cloud server, etc., and controls the operations of at least one device 200 in the device management system 10. In other words, the network apparatus 300 may control the operations of the device 200 which may communicate with the network apparatus 300. For example, the network apparatus 300 may be implemented as a home server, a cloud server, etc.

For example, the network apparatus 300 may generate a control command to control at least one device 200 based on a user command received from the user terminal apparatus 100 and transmit the control command to the device 200.

In addition, the network apparatus 300 may store a control command corresponding to a user command in order to control the at least one device 200 based on the received user command.

For example, if the device management system 10 is established as illustrated in FIG. 1, the network apparatus 300 may store a control command to control various functions provided by smart TV, home theater, light, robot cleaner and blinds and transmit a control command corresponding to a user command to each device. More specifically, once a user command to change the volume of TV is received from the user terminal apparatus 100, the network apparatus 300 may transmit a control command corresponding to a user command to change the volume of TV from among pre-stored control commands to the TV.

In the above description, the user terminal apparatus 100 performs communication with the at least one device 200 using the network apparatus 300, but this is only an example. For example, once the user terminal apparatus 100 and the at least one device 200 are connected using the network apparatus 300, the user terminal apparatus 100 and the at least one device 200 may perform communication directly without the network apparatus 300. In addition, it is possible that the user terminal apparatus 100 and the at least one device 200 perform communication directly from the beginning.

The user terminal apparatus 100 may store mapping information in which the at least one device 200 in a predetermined service space and its corresponding image are mapped. For example, the user terminal apparatus 100 may store information in which TV and its corresponding image are mapped. In addition, the user terminal apparatus 100 may store the model name of the TV, Internet Protocol (IP) address, Mac Address, the location of the TV and peripheral images of the TV. However, this is only an example, and the user terminal apparatus 100 may store mapping information regarding not only TV but also lighting apparatus, refrigerator, washing machine, etc., and mapping information of any device with a communication function.

The user terminal apparatus 100 may photograph an image and display an image of the at least one device 200 in a predetermined service space. The predetermined service space may be a space which is connected to the same communication network or a space generated by the network apparatus 300.

The user terminal apparatus 100 may identify the device included in the photographed image based on mapping information. For example, if TV is found in the photographed image, the user terminal apparatus 100 may compare an image regarding the TV in the mapping information with the TV image in the photographed image to identify the TV from the photographed image. However, this is only an example, and the user terminal apparatus 100 may identify the TV from the photographed image using not only the image regarding the TV in the mapping information but also the peripheral images of the TV.

If a user command related to the identified device 200 is input, the user terminal apparatus 100 may display information based on the user command on the photographed image. For example, the user terminal apparatus 100 may display a menu related to the identified device 200, and if a user command to monitor the operation state of the identified device 200 is input from the displayed menu, the user terminal apparatus 100 may request and display information regarding the operation state of the identified device 200. The specific operations based on a user command will be described in greater detail below.

The device 200 may be an electronic apparatus which is connected to network. For example, the device 200 may be a desktop computer, a notebook computer or a smart phone. However, this is only an example, and the device 200 may be any electronic apparatus with a communication function.

As described above, the user terminal apparatus 100 may identify the device 200 in the device management system 10 and manage the identified device 200.

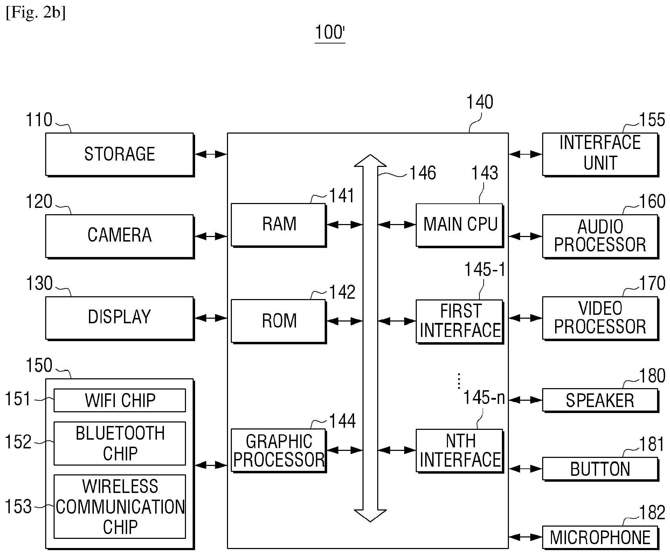

FIGS. 2A and 2B are block diagrams illustrating example configurations of the user terminal apparatus 100 according to an example embodiment.

According to FIG. 2A, the user terminal apparatus 100 may include a storage 110, a camera 120, a display 130 and a processor 140.

FIG. 2A illustrates that the user terminal apparatus 100 is an apparatus having various functions such as storage function, photographing function, display function, control function, etc., illustrating each element in a comprehensive manner. Accordingly, depending on example embodiments, some of the elements illustrated in FIG. 2A may be omitted or changed, or new elements may be added.

The storage 110 may store information in which the at least one device 200 in a predetermined service space and its corresponding image are mapped. For example, the storage 110 may store an image corresponding to TV in a predetermined service space, an image corresponding to a lighting apparatus and an image corresponding to a washing machine. However, this is only an example. As far as a device with a communication function, the storage 110 may store mapping information along with its corresponding image.

The information stored in the storage 110 may be mapping information which is set by a user. In addition, the storage 110 may store mapping information included in a photographed image received from a user terminal apparatus of another user, which will be described in detail later.

In addition to mapping information, the storage 110 may store information regarding a function provided by the device 200. For example, the storage 110 may store not only mapping information regarding TV but also information regarding a power on/off function provided by the TV, a volume control function, a channel switch function, etc. In the case of controlling the functions of the device 200, the user terminal apparatus 100 may provide a list of functions without separate communication with the device 200.

In addition, the storage 110 may store a macro command which will be described in greater detail below, etc. in addition to mapping information. The description regarding the feature of generating and executing a macro command will be provided in greater detail below.

The camera 120 is an element to photograph an image. The user terminal apparatus 100 may photograph at least one device 200 in a predetermined space using the camera. The camera 120 may generate an image photographed by the at least one device 200 at a specific point in time, but may also photograph images consecutively. The images photographed consecutively may be displayed by the display 130 which will be described in greater detail below.

The camera 120 includes lens, shutter, aperture, solid-state imaging device, Analog Front End (AFE), and Timing Generator (TG). The shutter adjusts the time where the light reflected by a subject enters the user terminal apparatus 100, and the aperture adjusts the amount of light incident on the lens by increasing or decreasing the size of opening where the light enters mechanically. When the light reflected on a subject is accumulated as photo charge, the solid-state image device outputs an image by the photo charge as an electrical signal. The TG outputs a timing signal to read out pixel data of a solid-state imaging element, and the AFE digitalize an electric signal output from the solid-state imaging element by sampling it.

The display 130 may display an image which is photographed, under the control of the processor 140. In addition, the display 130 may display a UI indicating a function provided by the device 200 included in the photographed image, a menu to control the device 200, etc. However, this is only an example, and the display 130 may display a UI where a user interaction can be input.

The display 130 may be implemented, for example, as Liquid Crystal Display Panel (LCD), Organic Light Emitting Diodes (OLED), etc., but is not limited thereto. In addition, depending on example embodiments, the display 130 may be implemented as a flexible display, a transparent display, etc.

The processor 140 may identify the device 200 included in a photographed image based on mapping information, and if a user command related to the identified device 200 is input, may display information according to the user command on the photographed image.

In addition, if a user command related to control of a function of the identified device 200 is input, the processor 140 may receive and display information regarding functions of the identified device 200 on the photographed image, and control to execute a function which is selected from the displayed information regarding the functions in the identified device 200.

The processor 140 may display a UI for generating a macro command to execute at least one function of a plurality of devices sequentially on one area of a photographed image, and if at least one function which is selected from the information regarding functions corresponding to each device is input on the UI, may generate a macro command to execute the functions of the plurality of devices sequentially on the UI.

In particular, if execution of a function of the device 200 included in the generated macro command is sensed, the processor 140 may execute a function of another device included in the macro command.

In addition, if a function of the device 200 included in the generated macro command is executed, the processor 140 may control the device 200 to transmit a signal for informing the execution of the function of the device 200, and if the signal is received, may sense that the function of the device 200 has been executed.

The user terminal apparatus 100 further includes a communicator (e.g., including communication circuitry) which performs communication with the network apparatus 300 which is installed in a predetermined service space to control the at least one device 200, and the processor 140 may transmit a control command to execute a selected function in the identified device 200 to the network apparatus 300.

In addition, if a user command to monitor an operation state of the identified device 200 is input, the processor 140 may receive information regarding an operation state of the identified device 200 and display the information on an area where the identified device 200 is displayed on the photographed image.

If a user command to generate a snap shot image regarding the photographed image is input, the processor 140 may generate a snap shot image including IP information and Mac Address information corresponding to the identified device on the photographed image.

In addition, the processor 140 may sense a device type included in the photographed image, broadcast a response request signal regarding the device 200 corresponding to the sensed device type in a predetermined space, if a response signal is received from the at least one device 200, display a list of devices which transmit the response signal, and store mapping information where an image of a device included in the photographed image and a device selected from the displayed list are mapped on the storage 110 based on a user command.

Here, if a response signal is received, the processor 140 may display a list of devices where identification information regarding the at least one device 200 is arranged consecutively based on at least one of the strength of the received signal and the time of the response signal being received.

FIG. 2B is a block diagram illustrating a more detailed example configuration of a user terminal apparatus 100' according to another example embodiment. According to FIG. 2B, the user terminal apparatus 100' includes the storage 110, the camera 120, the display 130, the processor 140, a communicator (e.g., including communication circuitry) 150, an interface unit (e.g., including interface circuitry) 155, an audio processor 160, a video processor 170, a speaker 180, a button 181, and a microphone 182. The description regarding the elements of FIG. 2B which are overlapped with those of FIG. 2A will not be provided.

The processor 140 controls the overall operations of the user terminal apparatus 100' using various programs stored in the storage 110.

Specifically, the processor 140 includes a RAM 141, a ROM 142, a main CPU 143, a graphic processor 144, first to nth interfaces 145-1∼145-n, and a bus 146.

The RAM 141, the ROM 142, the main CPU 143, the graphic processor 144, the firth to the nth interfaces 145-1∼145-n, etc. may be connected to each other through the bus 146.

The first to the nth interfaces 145-1 to 145-n are connected to the above-described various elements. One of the interfaces may be a network interface which is connected to an external apparatus via network.

The main CPU 143 accesses the storage 110 and performs booting using Operating System (O/S) stored in the storage 110. In addition, the main CPU 143 performs various operations using various programs, etc. stored in the storage 110.

The ROM 142 stores a set of commands for system booting. If a turn on command is input and thus power is supplied, the main CPU 143 copies the O/S stored in the storage 110 to the RAM 141 and executes the O/S according to the command stored in the ROM 142, thereby booting the system. If the booting is completed, the main CPU 143 copies various application programs stored in the storage 110 to the RAM 141 and executes the application programs copied to the RAM 141, thereby performing various operations.

The graphic processor 144 generates a screen including various objects such as an icon, an image, a text, etc. using an operator (not illustrated) and a renderer (not illustrated). The operator (not illustrated) operates attribute values, such as coordinate values, forms, sizes, and colors by which each object is displayed according to a layout of the screen based on a received control command. The renderer (not illustrated) generates a screen of various layouts including an object based on the attribute values calculated by the operator. The screen generated by the renderer (not illustrated) is displayed on a display area of the display 130.

Meanwhile, the operation of the above-described processor 140 may be performed by a program stored in the storage 110.

The storage 110 stores various data such as an O/S software module to drive the user terminal apparatus 100, mapping information where the at least one device 200 and its corresponding image are mapped, specification information of the at least one device 200, etc.

In this case, the processor 140 may process and display an input image based on the information stored in the storage 110.

The camera 120 is an element to photograph a still image or a moving image under the control of a user. The camera 120 may include a plurality of cameras such as a front camera and a rear camera.

The communicator 150 may perform communication with an external apparatus based on various types of communication methods using various communication circuitry.

The communicator 150 includes various communication circuitry, including, for example, and without limitation, chips such as a WiFi chip 151, a Bluetooth chip 152, a wireless communication chip 153, etc. The WiFi chip 151 and the Bluetooth chip 152 performs communication using a WiFi method and a Bluetooth method, respectively. The wireless communication chip 153 refers to a chip which performs communication according to various communication standards such as IEEE, ZigBee, 3rd Generation (3G), 3rd Generation Partnership Project (3GPP), Long Term Evolution (LTE), etc.

The interface unit 155 receives various user interactions via interface circuitry. If the user terminal apparatus 100 is implemented as an electronic apparatus which provides a touch function, the user interface unit 155 may, for example, be realized in the form of a touch screen which has a inter-layer structure with respect to a touch pad. In this case, the user interface unit 155 may be used as the above-described display 130.

The audio processor 160 is an element which processes audio data. The audio processor 160 may perform various processing with respect to audio data, such as decoding, amplification, noise filtering, etc.

The video processor 170 is an element which processes video data. The video processor 170 may perform various image processing with respect to audio data, such as decoding, scaling, noise filtering, frame rate conversion, resolution conversion, etc.

The speaker 180 is an element which outputs not only various audio data processed by the audio processor 160 but also various alarm sounds, voice messages, etc.

The button 181 may be realized as various types of buttons such as a mechanical button, a touch pad, a wheel, etc. which are formed on a certain area such as the front, side, or rear of the exterior of a main body. The microphone 182 is an element to receive a user voice or other sound and convert it to audio data.

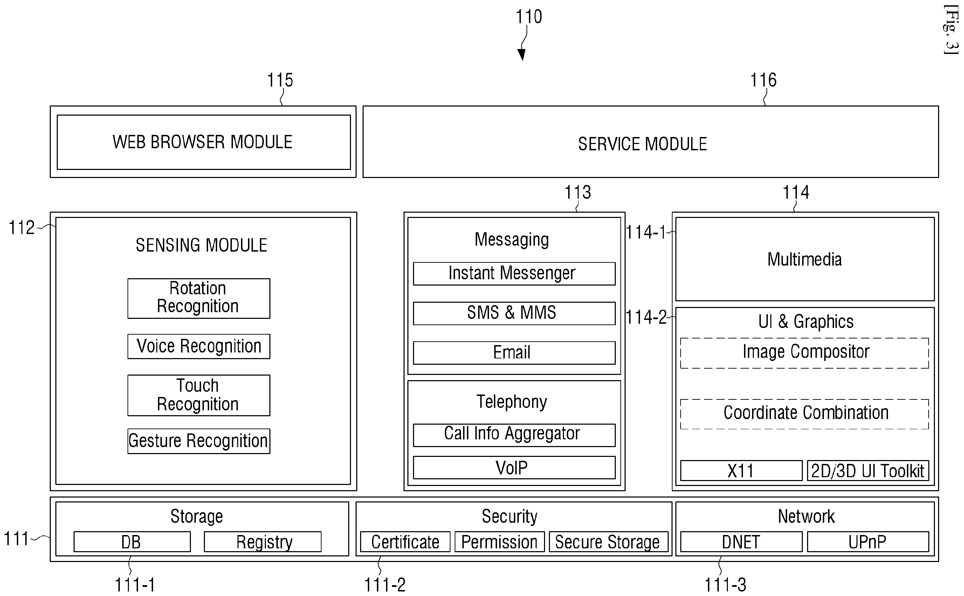

FIG. 3 is a diagram illustrating an example software structure stored in the storage 110 according to an example embodiment.

According to FIG. 3, the storage 110 may store software including a base module 111, a sensing module 112, a communication module 113, a presentation module 114, a web browser module 115 and a service module 116.

The base module 111 refers to a basic module which processes a signal transmitted from each hardware included in the user terminal apparatus 100, and transmits the processed signal to an upper layer module. The base module 111 may include a storage module 111-1 which manages database (DB) or registry, a security module 111-2 which supports certification, permission, secure storage of hardware, a network module 111-3 for supporting network connection, etc.

The sensing module is a module which collects information from various sensors, and analyzes and manages the collected information, and may include a face recognition module, a voice recognition module, a motion recognition module, and so on.

The communication module 113 is a module for performing communication with the at least one device 200 or the network apparatus 300.

The presentation module 114 is a module to compose a display screen, and may include a multimedia module 114-1 and a UI rendering module 114-2. The multimedia module 114-1 may include a player module, a camcorder module, a sound processing module, etc. The UI rendering module 114-2 may include an image compositor module compositing various objects, a coordinate compositor module compositing and generating coordinates on a screen to display an image, an X11 module receiving various events from hardware, a 2D/3D UI toolkit providing a tool for configuring a 2D or 3D type of UI, etc.

The web browser module 115 refers to a module which performs web browsing and accesses a web server.

The service module 116 is a module which includes various applications to provide various services. Specifically, the service module 116 may include various program modules such as a content play program other than a UI providing program according to an example embodiment, a notification management program, other widgets, etc. For example, the service module 116 may include a service program which provides a UI for managing the at least one device 200 according to an example embodiment.

FIG. 3 illustrates various program modules, but some of the illustrated various program modules may be omitted or changed, or other modules may be added depending on the type and characteristics of the user terminal apparatus 100. For example, a location-based module which supports a location-based service in association with hardware, such as a GPS chip may be further included.

Hereinafter, basic configuration and various example embodiments will be described for better understanding.

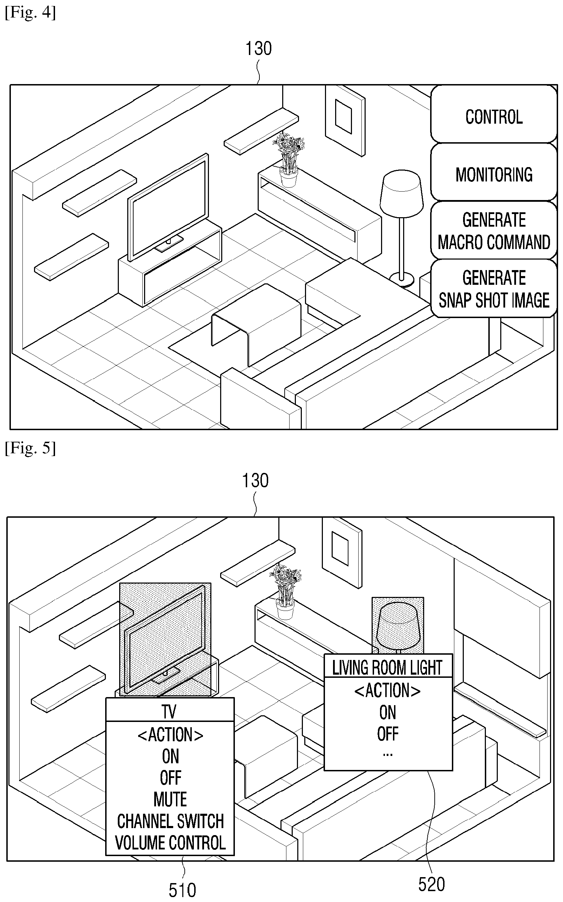

FIG. 4 is a diagram illustrating an example UI for receiving a user command related to the device 200 according to an example embodiment.

Referring to FIG. 4, the processor 140 may display an image where the at least one device 200 is photographed in a predetermined service space by the camera 120. In addition, the processor 140 may overlap a UI for receiving a user command related to the identified device 200 on a photographed image and provide thereon. For example, the processor 140 may provide a UI for receiving a user command regarding controlling, monitoring, generating a macro command, and generating a snap shot image.

Meanwhile, the processor 140 may display a UI when the at least one device 200 is identified from the photographed image. However, this is only an example, and the processor 140 may display a UI first and then, when there is a user input, may identify the at least one device 200 from the photographed image.

Meanwhile, the photographed image may be a preview image which is photographed in real time in the user terminal apparatus 100. For example, the photographed image may change as the user terminal apparatus 100 moves. However, this is only an example, and the photographed image may be a still image. For example, the photographed image may be a still image at a certain point in time. Alternatively, the photographed image may be an image which is photographed by another user terminal apparatus and then, received and stored. The photographed image may be an image which is stored at the moment when a device is recognized while a preview image is displayed. Hereinafter, the description will be provided based on the assumption that the photographed image includes all of the above-described concepts.

Meanwhile, FIG. 4 does not illustrate the network apparatus 300. However, the processor 140 may perform communication with the at least one device 200 through the network apparatus 300, and may perform communication directly with the at least one device 200. The network apparatus 300 may be a gateway within home, a server, an external could server, etc., but is not limited thereto. The network apparatus 300 may be any device which may relay communication with respect to the at least one device. Hereinafter, it is assumed that both direct communication between the user terminal apparatus 100 and the device and indirect communication through the network apparatus 300 is possible unless there is description otherwise.

FIG. 5 is a diagram illustrating an example of controlling of functions of the device 200 according to an example embodiment.

Referring to FIG. 5, the processor 140 may identify the device 200 included in the photographed image based on mapping information where the at least one device 200 in a predetermined service space and its corresponding image are mapped, and if a user command regarding the identified device 200 is input, may display information according to the user command on the photographed image.

In particular, if a user command regarding the controlling of a function of the identified device 200 is input, the processor 140 may receive information regarding the function of the identified device 200 from outside and display the information on the photographed image. For example, if a user command regarding the controlling of a function of TV is input, the processor 140 may receive and display on/off function, mute function, channel switch function, volume control function, etc. of TV. However, this is only an example, and the user terminal apparatus 200 may store information regarding the function of the device 200, and the processor 140 may not receive information regarding the function from the device 200 and display the pre-stored information regarding the function of the identified device 200.

Meanwhile, the processor 140 may display only information regarding controllable functions based on the state of the currently-identified device 220 from among information regarding the functions of the identified device 200. For example, if TV is currently turned off, the processor 140 may sense the operation state of the TV, may display only the function of turning on and may not display the function of turning off.

Meanwhile, the user terminal apparatus 100 may further include the communicator 150 configured to perform communication with the network apparatus 300 which is installed in a predetermined service space to control the at least one device 200, and the processor 140 may transmit a control command to execute a selected function in the identified device 200 to a network apparatus.

Here, the processor 140 may transmit a signal corresponding to a user command to the identified device 200 through the network apparatus 300 and receive a response signal thereof. However, this is only an example, and the processor 140 may perform communication directly with the identified device 200.

FIG. 5 is a view where a control is selected in a UI, and the processor 140 may receive and display information 510, 520 regarding the functions of TV and an electric light. However, this is only an example, and if a user touches TV directly and requests information regarding the functions of the TV, the processor 140 may display only information 510 regarding the functions of the TV.

The processor 140 may control to execute a selected function from among the displayed information regarding functions in the identified device 200. For example, if a user selects the function of turning on an electric light, the processor 140 may control to turn on the electronic light. As described above, the network apparatus 300 or a server may receive a control signal from the processor 140, but the processor 140 may also perform communication directly with the electric light to control the electric light.

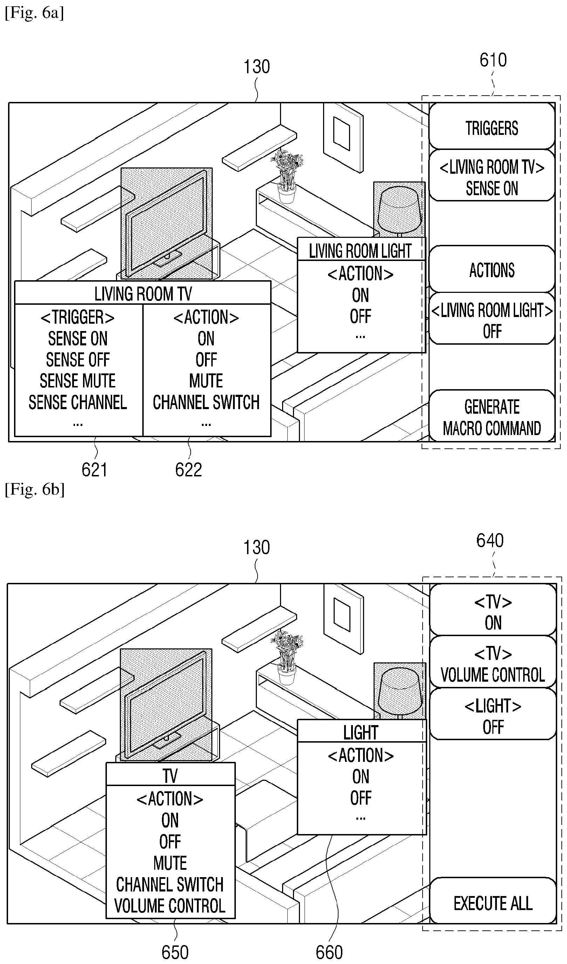

FIGS. 6A-6D are diagrams illustrating an example of generating of a macro command using a plurality of functions according to an example embodiment.

Referring to FIG. 6A, the processor 140 may display a UI 610 to generate a macro command which executes at least one function of a plurality of devices sequentially on one area of a photographed image. The processor 140 may display the UI 610 including a trigger area and an action area. However, this is only an example, and the processor 140 may display the UI 610 without separating areas.

If at least one selected function from among information regarding functions corresponding to each device is input on the UI, a macro command to execute the functions of a plurality of devices input on the UI sequentially may be generated. For example, if a user drags and drops sensing of on operation of TV with respect to a trigger area, drags and drops an off function of electric light with respect to an action area, and touches a rule generation button, the processor 140 may generate a rule of turning off the electric light when sensing that the TV is turned on. However, this is only an example, and the processor 140 may focus one of the trigger area and the action area and control to add the function where the user touches to the focused area.

The processor 140 may distinguish and display functions which are added to the trigger area and the action area for each device 200. For example, the processor 140 may display sensing of turning on TV as a function 621 to be added to the trigger area and the function of turning on TV as a function 622 to be added to the action area. However, this is only an example, and the processor 140 may information regarding the functions of the device 200 without distinguishing the information as illustrated in FIG. 4.

Meanwhile, if the UI 610 is displayed without distinction of areas, the processor 140 may display selected functions sequentially, and generate a macro command to execute the functions sequentially.

The processor 140 may generate a macro command by adding a plurality of functions to at least one of a trigger area and an action area. For example, if TV is turned on and a channel is changed, the processor 140 may generate a macro command to turn off an electric light. In addition, if the TV is turned off, the processor 140 may generate a macro command to turn off the electric light and stop the operation of a washing machine.

Meanwhile, the processor 140 may generate a macro command with a single device rather than a plurality of devices. For example, if TV is turned on, the processor 140 may generate a macro command to set the volume of the TV to a specific value.

If it is sensed that a function of the device 200 included in the generated macro command is executed, the processor 140 may control to execute a function of another device which is included in the macro command. For example, the processor 140 may control to turn off the electric light when the TV is turned off. However, this is only an example, and the processor 140 may transmit a generated macro command to the corresponding device 200 to perform operation directly. For example, the processor 140 may transmit a generated macro command to TV and control to turn off an electric light whenever the TV is turned on.

If a function of the device 200 included in the generated macro command is executed, the processor 140 may control the device 200 to transmit a signal for informing that the function of the device 200 has been executed, and if the signal is received, may sense that the function of the device 220 has been executed. For example, if a macro command to turn off an electric light when TV is turned on is generated, the processor 140 may control to transmit a signal for informing that the TV is turned on whenever the TV is turned on.

Referring to FIG. 6B, the processor 140 may display a UI 640 to generate a macro command which executes at least one function of a plurality of devices simultaneously on one area of a photographed image. The processor 140 may display information 650, 660 regarding the functions of an identified device and add a selected function from among the function 650, 660 regarding the functions to the UI 640.

If there is a user's input of all execution button, the processor 140 may control the corresponding device 200 to execute the functions included in the UI 640 simultaneously. For example, the processor 140 may generate a macro command to control turn-on of TV function, TV volume control function and turn-off of electric light function simultaneously, and may control the TV and the electric light according to the input of the all execution button.

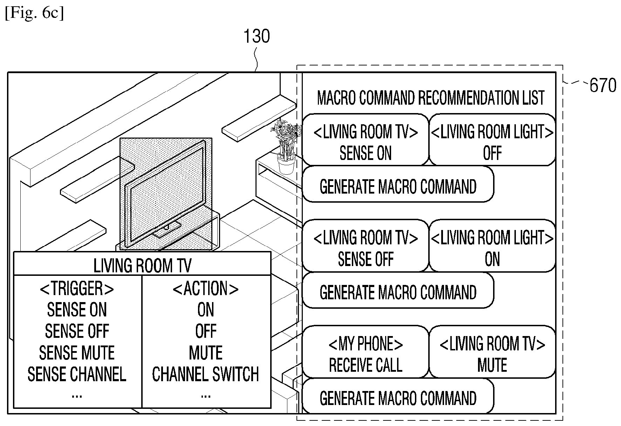

Referring to FIG. 6C, the processor 140 may display a UI 670 regarding a recommendation list of macro commands on one area of a photographed image. The processor 140 may generate and provide a macro command which can be used generally by a user. For example, the processor 140 may provide a macro command to turn off an electric light when TV is turned on in order to increase concentration on TV watching, a macro command to mute TV during phone conversation in order to minimize noise, etc.

Such a recommended macro command may be added when the user terminal apparatus 100 is manufactured, but is not limited thereto. For example, a new recommended macro command may be generated based on a usage pattern of a plurality of users.

If a button to generate a macro command from among macro commands in a recommendation list is input, the corresponding macro command may be generated and applied.

In the above description, only generation of a macro command has been described, but the processor 140 may display a list of macro commands which are currently generated and provide a UI for deleting them.

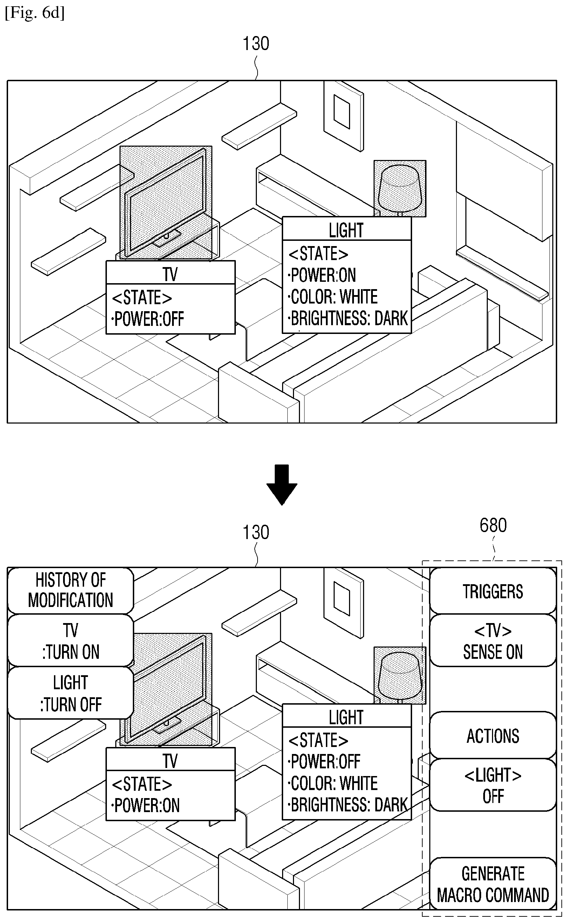

Referring to FIG. 6D, if a user command to display a UI 680 to generate a macro command is input, the processor 140 may provide a recommendation list regarding the functions of a plurality of devices to be included in the macro command based on the history of operation state of the plurality of devices at a predetermined time. For example, the processor 140 may sense the current operation state of a plurality of devices according to a user command while TV is turned on at a predetermined time, and the history of turning on an electric light is stored. In this state, if the TV is currently turned on and the electric light is turned off, the processor 140 may determine that the functions of turning on the TV and turning off the electric light have been executed after the predetermined time elapses and provide such functions in a recommendation list.

The processor 140 may request information regarding the operation state of the plurality of devices at a predetermined time and store the received information regarding the operation state. For example, the processor 140 may receive and store information regarding the operation state of the plurality of devices at a time when a user does not user the user terminal apparatus 100. However, this is only an example, and the processor 140 may receive and store information regarding the operation state of the plurality of devices at an interval of one hour.

If a user command to display the UI 680 to generate a macro command is input, the processor 140 may request information regarding the operation state of a plurality of devices and compare the received information regarding the operation state with information regarding the operation state of the plurality of devices at a predetermined time. However, this is only an example, and the processor 140 may request information regarding the operation state of the plurality of devices at a time when the user uses the user terminal apparatus 100 and compare the received information regarding the operation state with information regarding the operation state of the plurality of devices at a predetermined time. In addition, the processor 140 may request information regarding the operation state of the plurality of devices at an interval of one hour and compare the received information regarding the operation state with information regarding the operation state of the plurality of devices one hour ago.

The processor 140 may compare a plurality of pieces of information regarding the operation state with time differences, determine the history of change in the operation state information and provide the information to a user. However, this is only an example, and the processor 140 may provide such information to the user only when the history of the same change has been accumulated several times. In addition, if the history of the same change has been accumulated several times, the processor 140 may not provide such information to the user and may generate a macro command immediately.

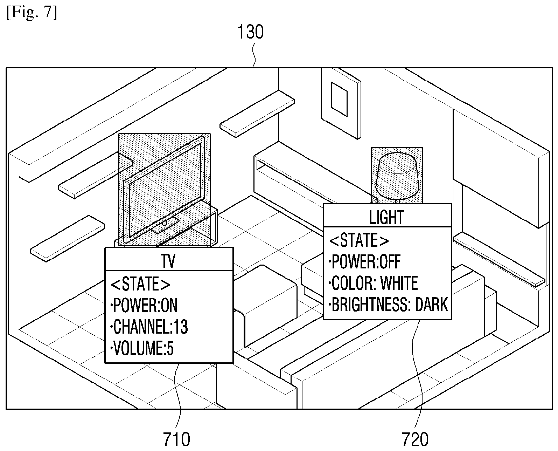

FIG. 7 is a diagram illustrating an example method of monitoring an operation state of the device 200 according to an example embodiment.

Referring to FIG. 7, if a user command to monitor the operation state of the identified device 200 is input, the processor 140 may receive information regarding the operation state of the identified device 200 and display the information on an area where the identified device is displayed on a photographed image. For example, the processor 140 may receive information 710 regarding the operation state of TV and display the information on an area where the TV is displayed on the photographed image. Additionally, the processor may receiv information 720 regarding the operation state of the light an display the information on an area where the light is displayed on the photographed image.

The information regarding the operation state of TV may include the current state of power, channel, volume, etc., but is not limited thereto. For example, the information regarding the operation state of TV may include information regarding the broadcaster of a channel which is currently displayed, information regarding an external apparatus which is connected to TV, etc.

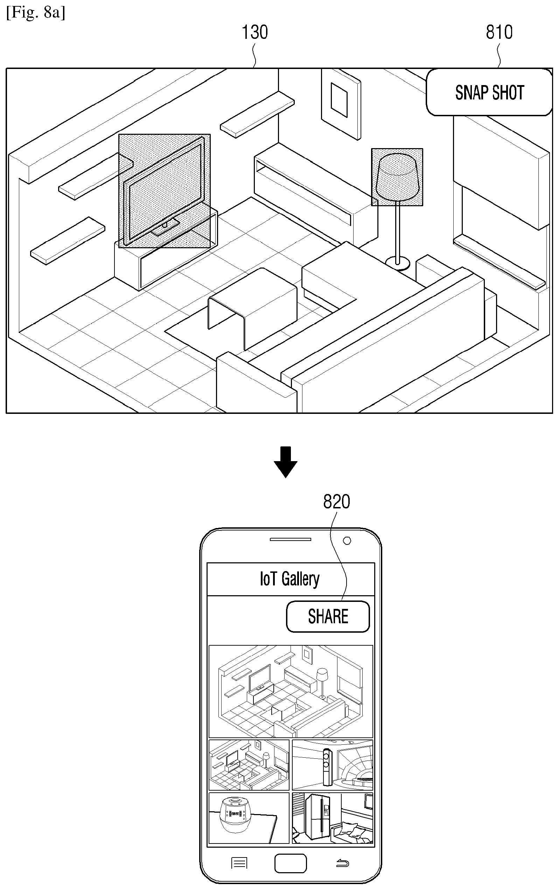

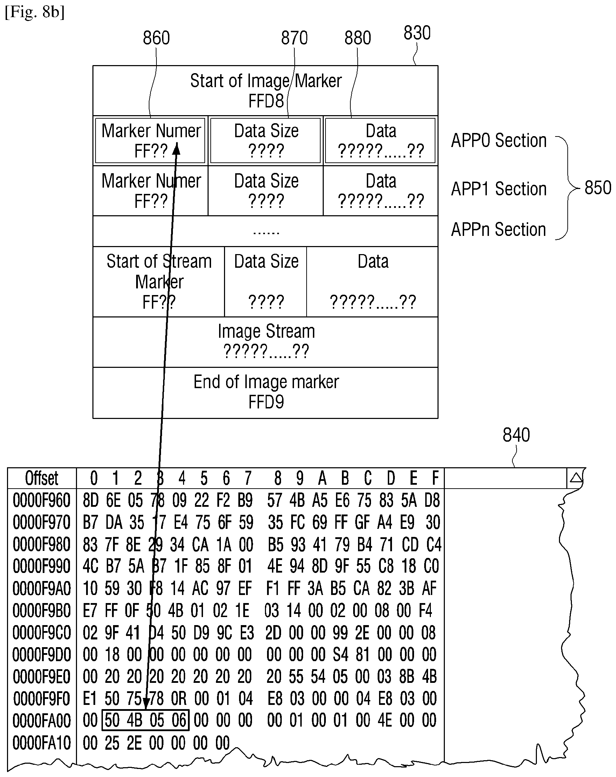

FIGS. 8A and 8B are diagrams illustrating an example method of generating and using a snap shot image according to an example embodiment.

Referring to FIG. 8A, if a user command to generate a snap shot image regarding a photographed image is input, the processor 140 may generate a snap shot image including at least one of IP information and MAC address information corresponding to an identified device on a photographed image. For example, if a user touches a snap shot button 810, the processor 140 may generate a snap shot image including information regarding TV and electric light included in a photographed image, and the information regarding TV and electric light may be stored as tag information of the snap shot image. The method of storing device information in a snap shot image will be described later.

The processor 140 may transmit a snap shot image which is generated as a user touches a share button 820 to another user terminal apparatus or receive a snap shot image generated in another user terminal apparatus. The processor 140 may control the device 200 included in the snap shot image using the received snap shot image. For example, the processor 140 may receive a snap shot image regarding a friend's house from the friend and control TV in the friend's house. In this case, the processor 140 may control the TV using at least one of IP information and MAC address information from among device information included in the snap shot image.

If the user terminal apparatus 100 is on the same network as the device 200 included in a snap shot image, the processor 140 may control the operation of the device 200 using a server, etc. However, if the user terminal apparatus 100 is on the same network as the device 200 included in the snap shot image, the processor 140 may control the operation of the device 200 directly. Alternatively, the processor 140 may be connected to the device 200 included in the snap shot image via Bluetooth and control the device 200. If the processor 140 is connected to the device 200 via Bluetooth, MAC address information from among device information included in the snap shot image may be used. The processor 140 may display a UI including snap shot images which are generated or received. The processor 140 may control the device 200 which is located at different places using the snap shot images.

Meanwhile, the processor 140 may the above-described functions of controlling the device 200, monitoring, generating a macro command, etc. using received snap shot images. In addition, the processor 140 may generate a macro command using a plurality of images. For example, the processor 140 may generate a macro command to turn on a notebook computer which is located at a user's house when a computer in a friend's house is turned on.

FIG. 8B illustrates a structure 830 of a snap shot image which is generated in a JPEG format and binary information 840 when a snap shot image is actually opened using an editor. The processor 140 may add device information to metadata and generate a snap shot image in a JPEG format. The processor 140 may include desired data in addition to various meta information which is required for basic information of an image in a snap shot image using an APPn Section 850.

Each of the APPn Section 850 may include Marker Number 860, Data Size 870, Data 880. The Marker Number 860 indicates a start location of the APPn Section 850. The Data Size 870 which is behind the Marker Number 860 indicates the size of data. The Data 880 which is behind the Data Size 870 stores data which is actually required.

The Data 880 may store as much as 524362 bytes which is large enough to include at least one of IP information and MAC address information corresponding to an identified device in a photographed image. The processor 140 may store communication protocol of a device, device name, manufacturer, functions provided by the device, etc. in Data 880. In addition, the processor 140 may include and store location information (x, y, width, height), etc. regarding a device image in a snap shot image.

In the above description, only a snap shot image in a JPEG format has been explained, but this is only an example. Any image in a format which can add device information can be used.

The processor 140 may generate device information and image information in one file using metadata, but may also generate the device information and the image information in a plurality of files. For example, the processor 140 may generate the existing image information which has been used as a snap shot image and generate information regarding a device as a file in the Xml format so that the device can be controlled only when there are two files.

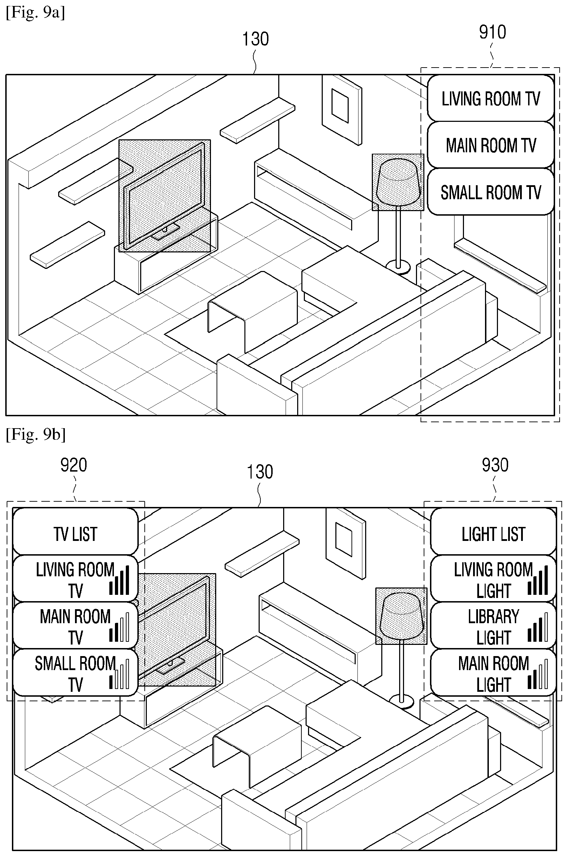

FIGS. 9A and 9B are diagrams illustrating an example method of generating mapping information according to an example embodiment.

Referring to FIG. 9, the processor 140 may sense the type of device included in a photographed image, and broadcast a response request signal regarding the device 200 corresponding to the sensed device type in a predetermined space. For example, if the shape of TV is sensed in a photographed image, the processor 140 may broadcast a response request signal of the device 200 corresponding to the TV from among the device 200 in a predetermined space. The device 200 which receives the response request signal may determine whether the device itself is TV or not, and if it is determined that the device is TV, may transmit a response signal and if not, may perform no operation. As described above, the device 200 may transmit a response signal to the network apparatus 300, but may also transmit a response signal to the user terminal apparatus 100 directly.

If a response signal is received from the at least one device 200, the processor 140 may display a list 910 of devices which transmit the response signal. For example, the processor 140 may receive a response signal from TV in the living room, TV in the main room and TV in the small room and display the corresponding device list 910. However, this is only an example, and the device 140 may display the model name of the device which transmits a response signal, which may be the name set by a user when each of the TV in the living room, TV in the main room and TV in the small room is connected to the network apparatus 300.

The processor 140 may store mapping information where the image of the device 200 included in a photographed image is mapped with the selected device 200 in the storage 110 based on a user command. For example, the processor 140 may generate mapping information according to a user command to map the TV image on a photographed image with the TV in the living room.

In addition, the processor 140 may map not only the TV image on a photographed image but also a peripheral image of the TV. Subsequently, even in an image which is photographed from different perspectives, the processor 140 may identify the TV in the living room from the mapping information using the TV image and the peripheral image of the TV.

Referring to FIG. 9B, if a response signal is received, the processor 140 may display a device list 920, 930 where identification information of the at least one device 200 is arranged sequentially based on at least one of strength of the received signal and a time when the response signal is received. For example, if the received signal is strong or the time when the response signal is received is short, the processor 140 may determine that the device 200 corresponding to the user terminal apparatus 100 is located in an adjacent area, and may determine that it is highly likely that the device 200 is included in the photographed image. Accordingly, the processor 140 may dispose the model name, etc. of the corresponding device 200 in an upper area and display a device list so that a user can select the device easily.

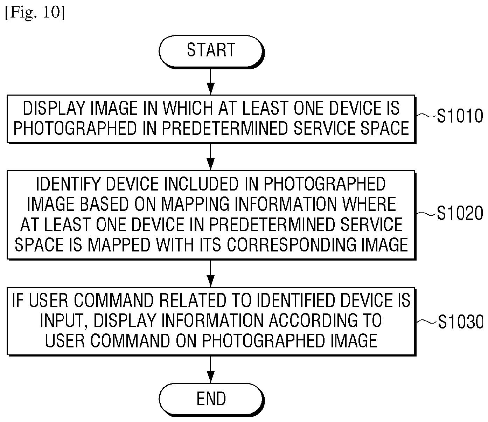

FIG. 10 is a flowchart illustrating an example method of controlling a user terminal apparatus according to an example embodiment.

An image in which at least one device is photographed in a predetermined service space is displayed (S1010). A device included in the photographed image is identified based on mapping information where at least one device in the predetermined service space is mapped with its corresponding image (S1020). If a user command related to the identified device is input, information according to the user command is displayed on the photographed image (S1030).

The step of displaying the information on the photographed image (S1030) may further include, if a user command related to the control of functions of the identified device is input, receiving information regarding the functions of the identified device from outside and displaying the information on the photographed image, and controlling to execute a selected function from among the displayed information regarding the functions in the identified device.

In addition, the step of displaying a UI to generate a macro command to execute at least one function of a plurality of devices in one area of the photographed image and if at least one function which is selected from among information regarding a function corresponding to each device is input on the UI, generating a macro command to execute the functions of a plurality of devices which are input on the UI sequentially may be further included.

If the execution of the function of the device included in the generated macro command is sensed, the step of executing the function of another device included in the macro command may be further included.

If a user command to display a UI to generate a macro command is input, the step of providing a recommendation list regarding the functions of a plurality devices to be included in the macro command based on the history of the operation state of the plurality of devices at a predetermined time may be further included.

In addition, the step of controlling may include transmitting a control command to execute a selected function in the identified device to a network apparatus which is installed in a predetermined service space to control at least one device.

The step of displaying the information on the photographed image (S1030) may include, if a user command to monitor the operation state of the identified device is input, receiving information regarding the operation state of the identified device and displaying the information in an area where the identified device is displayed on the photographed image.

If a user command to generate a snap shot image regarding the photographed image is input, a snap shot image including at least one of IP information and MAC address information corresponding to the identified device may be generated on the photographed image.

The steps of sensing the type of device included in the photographed image, broadcasting a response request signal regarding a device corresponding to the sensed device type in a predetermined space, if a response signal is received from at least one device, displaying a list of devices which transmit a response signal, and storing mapping information where the image of the device included in the photographed image with a device selected from among the list of devices are mapped may be further included.

In addition, the step of displaying a device list may include, if a response signal is received, displaying a device list where identification information of at least one device is arranged sequentially based on at least one of strength of the received response signal and the time when the response signal is received.

According to the above-described various example embodiments, a user terminal device may identify a device included in a photographed image based on mapping information and manage the identified device accordingly. Thus, a user may manage various devices more conveniently.

According to the above-described various example embodiments, a user terminal apparatus may determine whether to inactivate an application based on the usage history data regarding a user interaction and inactivate an unnecessary application, thereby improving efficiency of resources and batteries. Thus, user convenience can be enhanced.

Meanwhile, the methods according to the above-described various example embodiments can be programmed and stored in various storage media. Accordingly, the methods according to the above-described various example embodiments can be implemented in various types of electronic apparatuses which execute the storage media.

For example, according to an example embodiment, a non-transitory computer readable medium storing a program which sequentially performs the steps of displaying an image where at least one device is photographed in a predetermined service space, identifying a device included in the photographed image based on mapping information where at least one device in the predetermined service space and its corresponding image are mapped, and if a user command related to the identified device is input, displaying information according to the user command on the photographed image may be provided.

The non-transitory recordable medium refers to a medium which may store data semi-permanently and is readable by an apparatus. For example, the above-described various applications and programs may be stored and provided in a non-transitory recordable medium such as CD, DVD, hard disk, Blu-ray disk, USB, memory card, ROM, etc.

The foregoing example embodiments and advantages are merely example and are not to be construed as limiting the disclosure. The present teaching can be readily applied to other types of apparatuses. Also, the description of the example embodiments of the disclosure is intended to be illustrative, and many alternatives, modifications, and variations will be apparent to those skilled in the art. The scope of the invention is defined by the appended claims.

## Claims

1. A user terminal apparatus (100), comprising:
a storage (110) for storing mapping information for mapping at least one device (200) in a predetermined service space on a corresponding image;
a camera (120);
a display (130); and
a processor (140) configured to:
display a first photographed image captured by the camera (120) on the display (130), the first photographed image including the at least one device (200),
sense a type of a device (200) included in the first photographed image and broadcast a response request signal regarding a device (200) corresponding to the sensed device type in the predetermined space, display a list (910, 920, 930) of devices (200) which transmit a response signal based on the response request signal being received from the at least one device (200), generate and store mapping information in the storage (110), wherein an image of a device (200) included in the first photographed image and a device selected from the displayed list (910, 920, 930) are mapped in the storage (110) based on a user command, and
identify in a second photographed image captured by the camera (120) a device (200) from the at least one device (200) based on the stored mapping information, and, based on receiving a user command related to the identified device (200), display information on the second photographed image.

2. The apparatus as claimed in claim 1, wherein the processor (140) is configured to, after identification of the device (200) in the second photographed image, receive information regarding functions of the identified device (200) from the identified device (200) in response to receiving a command related to controlling of functions of the identified device (200), to display the information on the photographed image, and
to execute a function selected from the displayed information regarding functions on the identified device (200).

3. The apparatus as claimed in claim 2, wherein the processor (140) is configured to display a UI for generating a macro command to execute at least one function of a plurality of devices (200) consecutively on an area of the photographed image, and
to generate, based on input on the UI, a macro command to execute the functions of the plurality of devices (200) consecutively in response to at least one function selected from the information regarding functions corresponding to each device (200) being input on the UI.

4. The apparatus as claimed in claim 3, wherein the processor (140) is configured to execute a function of another device (200) included in the macro command in response to execution of a function of a device (200) included in the generated macro command being sensed.

5. The apparatus as claimed in claim 3, wherein the processor (140) is configured to provide a recommendation list (670) regarding functions of the plurality of devices (200) to be included in the macro command based on a history of operation states of the plurality of devices (200) at a predetermined point in time in response to receiving a command to display the UI for generating a macro command.

6. The apparatus as claimed in claim 2, further comprising:
a communicator comprising communication circuitry configured to perform communication with a network apparatus disposed in the predetermined service space to control the at least one device (200),
wherein the processor (140) is configured to transmit a control command to execute the selected function on the identified device (200) to the network apparatus.

7. The apparatus as claimed in claim 1, wherein the processor (140) is configured to receive information regarding an operation state of the identified device (200) and to display the information on an area where the identified device (200) is displayed on the photographed image in response to receiving a command to monitor an operation state of the identified device (200).

8. The apparatus as claimed in claim 1, wherein the processor (140) is configured to generate a snap shot image including at least one of Internet Protocol, IP, information and Mac address information corresponding to the identified device (200) on the photographed image in response to receiving a command to generate a snap shot image regarding the photographed image.

9. The apparatus as claimed in claim 1, wherein the processor (140) is configured to display the device list (910, 920, 930) in which identification information of the at least one device (200) is arranged consecutively based on at least one of strength of the received signal and a time at which the response signal is received in response to the response signal being received.

10. A method of controlling a user terminal apparatus (100), comprising:
displaying a first photographed image, the first photographed image including at least one device (200) in a predetermined service space;
sensing a type of a device (200) included in the first photographed image and broadcasting a response request signal regarding a device (200) corresponding to the sensed device type in the predetermined space, displaying a list (910, 920, 930) of devices (200) which transmit a response signal based on the response request signal being received from the at least one device (200), generating and storing mapping information, wherein an image of a device (200) included in the first photographed image and a device (200) selected from the displayed list (910, 920, 930) are mapped based on a user command; and
identifying in a second photographed image a device (200) from the at least one device (200) based on the stored mapping information, and, based on receiving a user command related to the identified device (200), displaying information on the second photographed image.

11. The method as claimed in claim 10, wherein the displaying on the photographed image further comprises:
in response to receiving a command related to controlling of functions of the identified device (200) after identification of the device (200) in the second photographed image, receiving information regarding functions of the identified device (200) from the identified device (200) and displaying the information on the photographed image, and
executing a function selected from the displayed information regarding functions on the identified device (200).

12. The method as claimed in claim 11, further comprising:
displaying a UI for generating a macro command to execute at least one function of a plurality of devices (200) consecutively on an area of the photographed image; and
in response to at least one function selected from the information regarding functions corresponding to each device (200) being input on the UI, generating, based on input on the UI, a macro command to execute the functions of the plurality of devices (200) consecutively.

13. The method as claimed in claim 12, further comprising:
executing a function of another device (200) included in the macro command in response to execution of a function of a device (200) included in the generated macro command being sensed.

14. The method as claimed in claim 12, further comprising:
providing a recommendation list (670) regarding functions of the plurality of devices (200) to be included in the macro command based on a history of operation states of the plurality of devices (200) at a predetermined point in time in response to receiving a command to display the UI for generating a macro command.

## Patentansprüche

1. Benutzerendgerätevorrichtung (100), umfassend:
einen Speicher (110) zum Speichern von Abbildungsinformationen zum Abbilden mindestens eines Gerätes (200) in einem vorgegebenen Service-Raum auf einem entsprechenden Bild;
eine Kamera (120);
einen Bildschirm (130); und
einen Prozessor (140), der so konfiguriert ist, dass er:
ein erstes fotografiertes Bild, das durch die Kamera (120) erfasst wurde, auf dem Bildschirm (130) anzeigt, wobei das erste fotografierte Bild das mindestens eine Gerät (200) einschließt,
einen Typ eines Gerätes (200), das in dem ersten fotografierten Bild eingeschlossen ist, abfühlt und ein Antwortanforderungssignal bezüglich eines Gerätes (200), das dem abgefühlten Gerätetyp in dem vorgegebenen Raum entspricht, rundsendet, eine Liste (910, 920, 930) von Geräten (200) anzeigt, die ein Antwortsignal auf der Grundlage des aus dem mindestens einen Gerät (200) empfangenen Antwortanforderungssignals senden, Abbildungsinformationen erzeugt und in dem Speicher (110) speichert, wobei ein Bild eines Gerätes (200), das in dem ersten fotografierten Bild eingeschlossen ist, und ein aus der anzeigten Liste (910, 920, 930) ausgewähltes Gerät in dem Speicher (110) auf der Grundlage eines Benutzerbefehls abgebildet werden, und
in einem zweiten fotografierten Bild, das durch die Kamera (120) erfasst wurde, ein Gerät (200) aus dem mindestens einen Gerät (200) auf der Grundlage der gespeicherten Abbildungsinformationen identifiziert und auf der Grundlage des Empfangs eines Benutzerbefehls, der mit dem identifizierten Gerät (200) in Beziehung steht, Informationen auf dem zweiten fotografierten Bild anzeigt.

2. Vorrichtung nach Anspruch 1, wobei der Prozessor (140) so konfiguriert ist, dass er nach der Identifizierung des Gerätes (200) in dem zweiten fotografierten Bild Informationen bezüglich Funktionen des identifizierten Gerätes (200) aus dem identifizierten Gerät (200) als Antwort auf den Empfang eines Befehls, der mit der Steuerung von Funktionen des identifizierten Gerätes (200) in Beziehung steht, empfängt, um die Informationen auf dem fotografierten Bild anzuzeigen, und
eine aus den angezeigten Informationen bezüglich Funktionen ausgewählte Funktion auf dem identifizierten Gerät (200) ausführt.

3. Vorrichtung nach Anspruch 2, wobei der Prozessor (140) so konfiguriert ist, dass er eine UI anzeigt zur Erzeugung eines Makrobefehls, um mindestens eine Funktion einer Mehrzahl von Geräten (200) nacheinander auf einem Bereich des fotografierten Bildes auszuführen, und
auf der Grundlage einer Eingabe auf der UI einen Makrobefehl, um die Funktionen der Mehrzahl von Geräten (200) nacheinander auszuführen, erzeugt als Antwort auf mindestens eine Funktion, ausgewählt aus den Informationen bezüglich Funktionen, die jedem Gerät (200) entsprechen, eingegeben auf der UI.

4. Vorrichtung nach Anspruch 3, wobei der Prozessor (140) so konfiguriert ist, dass er eine Funktion eines anderen Gerätes (200), das in dem Makrobefehl eingeschlossen ist, als Antwort auf die Ausführung einer Funktion eines abgefühlten Gerätes (200), das in dem erzeugten Makrobefehl eingeschlossen ist, ausführt.

5. Vorrichtung nach Anspruch 3, wobei der Prozessor (140) so konfiguriert ist, dass er als Antwort auf den Empfang eines Befehls, die UI zur Erzeugung eines Makrobefehls anzuzeigen, eine Empfehlungsliste (670) bereitstellt bezüglich Funktionen der Mehrzahl von Geräten (200), die in den Makrobefehl einzuschließen sind, auf der Grundlage einer Chronik von Betriebszuständen der Mehrzahl von Geräten (200) zu einem vorgegebenen Zeitpunkt.

6. Vorrichtung nach Anspruch 2, ferner umfassend:
einen Zeichengeber, umfassend Kommunikationsschaltungen, die so konfiguriert sind, dass sie eine Kommunikation durchführen mit einer Netzwerkvorrichtung, die in dem vorgegebenen Service-Raum angeordnet ist, um das mindestens eine Gerät (200) zu steuern,
wobei der Prozessor (140) so konfiguriert ist, dass er einen Steuerbefehl, um die ausgewählte Funktion auf dem identifizierten Gerät (200) auszuführen, an die Netzwerkvorrichtung sendet.

7. Vorrichtung nach Anspruch 1, wobei der Prozessor (140) so konfiguriert ist, dass er als Antwort auf den Empfang eines Befehls, einen Betriebszustand des identifizierten Gerätes (200) zu überwachen, Informationen bezüglich eines Betriebszustandes des identifizierten Gerätes (200) empfängt und die Informationen auf einem Bereich, wo das identifizierte Gerät (200) auf dem fotografierten Bild angezeigt wird, anzeigt.

8. Vorrichtung nach Anspruch 1, wobei der Prozessor (140) so konfiguriert ist, dass er als Antwort auf den Empfang eines Befehls, ein Schnappschussbild bezüglich des fotografierten Bildes zu erzeugen, ein Schnappschussbild erzeugt, das mindestens eine aus Internet-Protokoll-Informationen, IP-Informationen, und Mac-Adressinformationen einschließt, die dem identifizierten Gerät (200) auf dem fotografierten Bild entsprechen.

9. Vorrichtung nach Anspruch 1, wobei der Prozessor (140) so konfiguriert ist, dass er als Antwort auf den Empfang des Antwortsignals die Geräteliste (910, 920, 930) anzeigt, in der Identifizierungsinformationen des mindestens einen Gerätes (200) nacheinander angeordnet sind auf der Grundlage mindestens einer aus der Stärke des empfangenen Signals und einer Zeit, zu der das Antwortsignal empfangen wird.

10. Verfahren zur Steuerung einer Benutzerendgerätevorrichtung (100), umfassend:
Anzeigen eines ersten fotografierten Bildes, wobei das erste fotografierte Bild mindestens ein Gerät (200) in einem vorgegebenen Service-Raum einschließt;
Abfühlen eines Typs eines Gerätes (200), das in dem ersten fotografierten Bild eingeschlossen ist, und Rundsenden eines Antwortanforderungssignals bezüglich eines Gerätes (200), das dem abgefühlten Gerätetyp in dem vorgegebenen Raum entspricht, Anzeigen einer Liste (910, 920, 930) von Geräten (200), die ein Antwortsignal auf der Grundlage des aus dem mindestens einen Gerät (200) empfangenen Antwortanforderungssignals senden, Erzeugen und Speichern von Abbildungsinformationen, wobei ein Bild eines Gerätes (200), das in dem ersten fotografierten Bild eingeschlossen ist, und ein aus der anzeigten Liste (910, 920, 930) ausgewähltes Gerät (200) auf der Grundlage eines Benutzerbefehls abgebildet werden; und
Identifizieren, in einem zweiten fotografierten Bild, eines Gerätes (200) aus dem mindestens einen Gerät (200) auf der Grundlage der gespeicherten Abbildungsinformationen und, auf der Grundlage des Empfangs eines Benutzerbefehls, der mit dem identifizierten Gerät (200) in Beziehung steht, Anzeigen von Informationen auf dem zweiten fotografierten Bild.

11. Verfahren nach Anspruch 10, wobei das Anzeigen auf dem fotografierten Bild ferner umfasst:
als Antwort auf den Empfang eines Befehls, der mit der Steuerung von Funktionen des identifizierten Gerätes (200) in Beziehung steht, nach der Identifizierung des Gerätes (200) in dem zweiten fotografierten Bild, Empfangen von Informationen bezüglich Funktionen des identifizierten Gerätes (200) aus dem identifizierten Gerät (200) und Anzeigen der Informationen auf dem fotografierten Bild, und
Ausführen einer aus den angezeigten Informationen bezüglich Funktionen ausgewählten Funktion auf dem identifizierten Gerät (200).

12. Verfahren nach Anspruch 11, ferner umfassend:
Anzeigen einer UI zur Erzeugung eines Makrobefehls, um mindestens eine Funktion einer Mehrzahl von Geräten (200) nacheinander auf einem Bereich des fotografierten Bildes auszuführen; und
als Antwort auf mindestens eine Funktion, ausgewählt aus den Informationen bezüglich Funktionen, die jedem Gerät (200) entsprechen, eingegeben auf der UI, Erzeugen, auf der Grundlage einer Eingabe auf der UI, eines Makrobefehls, um die Funktionen der Mehrzahl von Geräten (200) nacheinander auszuführen.

13. Verfahren nach Anspruch 12, ferner umfassend:
Ausführen einer Funktion eines anderen Gerätes (200), das in dem Makrobefehl eingeschlossen ist, als Antwort auf die Ausführung einer Funktion eines abgefühlten Gerätes (200), das in dem erzeugten Makrobefehl eingeschlossen ist.

14. Verfahren nach Anspruch 12, ferner umfassend:
als Antwort auf den Empfang eines Befehls, die UI zur Erzeugung eines Makrobefehls anzuzeigen, Bereitstellen einer Empfehlungsliste (670) bezüglich Funktionen der Mehrzahl von Geräten (200), die in den Makrobefehl einzuschließen sind, auf der Grundlage einer Chronik von Betriebszuständen der Mehrzahl von Geräten (200) zu einem vorgegebenen Zeitpunkt.

## Revendications

1. Appareil terminal d'utilisateur (100), comprenant :
une mémoire (110) destinée à stocker des informations de mappage pour la mise en correspondance d'au moins un dispositif (200) dans un espace de service prédéterminé avec une image respective ;
une caméra (120) ;
un écran (130) ; et
un processeur (140) prévu pour :
afficher une première image photographiée par la caméra (120) sur l'écran (130), ladite première image photographiée comprenant ledit au moins un dispositif (200),
détecter un type de dispositif (200) compris dans la première image photographiée et diffuser un signal de demande de réponse relatif à un dispositif (200) correspondant au type de dispositif détecté dans l'espace prédéterminé, afficher une liste (910, 920, 930) de dispositifs (200) transmettant un signal de réponse sur la base du signal de demande de réponse reçu dudit au moins un dispositif (200), générer et stocker des informations de mappage dans la mémoire (110), une image d'un dispositif (200) compris dans la première image photographiée et un dispositif sélectionné dans la liste affichée (910, 920, 930) étant mis en correspondance dans la mémoire (110) sur la base d'une commande d'utilisateur, et
identifier, dans une deuxième image photographiée par la caméra (120), un dispositif (200) parmi les un ou plusieurs dispositifs (200) sur la base des informations de mappage stockées, et, sur la base de la réception d'une commande d'utilisateur relative au dispositif identifié (200), afficher des informations sur la deuxième image photographiée.

2. Appareil selon la revendication 1, où le processeur (140) est prévu pour recevoir, après identification du dispositif (200) dans la deuxième image photographiée, des informations relatives à des fonctions du dispositif identifié (200) du dispositif identifié (200) en réaction à la réception d'une instruction relative à la commande de fonctions du dispositif identifié (200), pour afficher les informations sur l'image photographiée, et
pour exécuter une fonction sélectionnée parmi les informations affichées relatives à des fonctions sur le dispositif identifié (200).

3. Appareil selon la revendication 2, où le processeur (140) est prévu pour afficher une interface d'utilisateur pour la génération d'une macro-commande afin d'exécuter au moins une fonction d'une pluralité de dispositifs (200) successivement sur une zone de l'image photographiée, et
pour générer, sur la base d'une entrée sur l'interface d'utilisateur, une macro-commande afin d'exécuter les fonctions de la pluralité de dispositifs (200) successivement, en réaction à au moins une fonction sélectionnée parmi les informations relatives à des fonctions correspondant à chaque dispositif (200), entrée sur l'interface d'utilisateur.

4. Appareil selon la revendication 3, où le processeur (140) est prévu pour exécuter une fonction d'un autre dispositif (200) compris dans la macro-commande en réaction à la détection de l'exécution d'une fonction d'un dispositif (200) compris dans la macro-commande générée.

5. Appareil selon la revendication 3, où le processeur (140) est prévu pour délivrer une liste de recommandations (670) relative à des fonctions de la pluralité de dispositifs (200) à comprendre dans la macro-commande sur la base d'un historique d'états de fonctionnement de la pluralité de dispositifs (200) à un moment défini, en réaction à la réception d'une commande d'affichage de l'interface d'utilisateur pour générer une macro-commande.

6. Appareil selon la revendication 2, comprenant en outre :
un communicateur comprenant un circuit de communication prévu pour établir une communication avec un appareil de réseau disposé dans l'espace de service prédéterminé pour commander ledit au moins un dispositif (200),
le processeur (140) étant prévu pour transmettre à l'appareil de réseau une instruction de commande afin d'exécuter la fonction sélectionnée sur le dispositif identifié (200).

7. Appareil selon la revendication 1, où le processeur (140) est prévu pour recevoir des informations relatives à un état de fonctionnement du dispositif identifié (200) et pour afficher les informations sur une zone où le dispositif identifié (200) est affiché sur l'image photographiée, en réaction à la réception d'une commande de surveillance d'un état de fonctionnement du dispositif identifié (200).

8. Appareil selon la revendication 1, où le processeur (140) est prévu pour générer une image instantanée comprenant des informations de protocole Internet, IP, et/ou des informations d'adresse Mac correspondant au dispositif identifié (200) sur l'image photographiée, en réaction à la réception d'une commande de génération d'une image instantanée relative à l'image photographiée.

9. Appareil selon la revendication 1, où le processeur (140) est prévu pour afficher la liste (910, 920, 930) de dispositifs où des informations d'identification dudit au moins un dispositif (200) sont présentées successivement sur la base de l'intensité du signal reçu et/ou du moment où le signal de réponse est reçu, en réaction à la réception du signal de réponse.

10. Procédé de commande d'un appareil terminal d'utilisateur (100), comprenant :
l'affichage d'une première image photographiée, ladite première image photographiée comprenant au moins un dispositif (200) dans un espace de service prédéterminé ;
la détection d'un type de dispositif (200) compris dans la première image photographiée, et la diffusion d'un signal de demande de réponse relatif à un dispositif (200) correspondant au type de dispositif détecté dans l'espace prédéterminé, l'affichage d'une liste (910, 920, 930) de dispositifs (200) transmettant un signal de réponse sur la base du signal de demande de réponse reçu dudit au moins un dispositif (200), la génération et la mémorisation d'informations de mappage, une image d'un dispositif (200) compris dans la première image photographiée et un dispositif (200) sélectionné dans la liste (910, 920, 930) affichée étant mis en correspondance sur la base d'une commande d'utilisateur ; et
l'identification dans une deuxième image photographiée d'un dispositif (200) parmi les un ou plusieurs dispositifs (200) sur la base des informations de mappage stockées, et, sur la base de la réception d'une commande d'utilisateur relative au dispositif identifié (200), l'affichage d'informations sur la deuxième image photographiée.

11. Procédé selon la revendication 10, où l'affichage sur l'image photographiée comprend en outre :
en réaction à la réception d'une instruction relative à la commande de fonctions du dispositif identifié (200) après identification du dispositif (200) dans la deuxième image photographiée, la réception d'informations relatives à des fonctions du dispositif identifié (200) en provenance du dispositif identifié (200) et l'affichage des informations sur l'image photographiée, et
l'exécution d'une fonction sélectionnée parmi les informations affichées relatives aux fonctions sur le dispositif identifié (200).

12. Procédé selon la revendication 11, comprenant en outre :
l'affichage d'une interface d'utilisateur pour la génération d'une macro-commande afin d'exécuter au moins une fonction d'une pluralité de dispositifs (200) successivement sur une zone de l'image photographiée ; et
en réaction à au moins une fonction sélectionnée parmi les informations relatives aux fonctions correspondant à chaque dispositif (200), entrée sur l'interface d'utilisateur, la génération, sur la base d'une entrée sur l'interface d'utilisateur, d'une macro-commande afin d'exécuter les fonctions de la pluralité de dispositifs (200) successivement.

13. Procédé selon la revendication 12, comprenant en outre :
l'exécution d'une fonction d'un autre dispositif (200) compris dans la macro-commande en réaction à la détection de l'exécution d'une fonction d'un dispositif (200) compris dans la macro-commande générée.

14. Procédé selon la revendication 12, comprenant en outre :
la délivrance d'une liste de recommandations (670) relative à des fonctions de la pluralité de dispositifs (200) à comprendre dans la macro-commande sur la base d'un historique d'états de fonctionnement de la pluralité de dispositifs (200) à un moment défini, en réaction à la réception d'une commande d'affichage de l'interface d'utilisateur pour la génération d'une macro-commande.
